# EUROPEAN PATENT APPLICATION

(11) **EP 2 495 501 A2**
(43) Date of publication of application: **05.09.2012**
(21) Application number: 11191814.0
(22) Date of filing: 02.12.2011
(51) Int. Cl.: F24F 7/013, F24F 11/00

(54) **An air distribution system**

(30) Priority: 01.03.2011 IN MU07322011
(71) Applicant: Stulz-Chspl (India) PVT, Ltd., 400 016 Mumbai (IN); Balakrishnan, Rajesh, 400 016 Mumbai (IN)
(72) Inventor: Balakrishnan, Rajesh, 400016 Mumbai (IN)
(74) Representative: Bittner, Bernhard

(57) **Abstract**

An air distribution system comprising an Air booster, an Air modulator, and an air booster -pro for providing variable air volume under floor air distribution in a premise not limited to data centre and computer rooms. An air booster further comprising variable fan regulation, temperature averaging algorithm and pressure override control means. An air modulator further comprising variable damper blade regulation, temperature averaging algorithm and pressure override. An air booster- pro further comprising, variable fan regulation, temperature averaging algorithm, pressure override control and an adjustable air flow direction.

## Description

### FIELD OF THE INVENTION

The invention relates generally to an air distribution system such as an air booster / air modulator / air booster - Pro and an apparatus and particularly to providing variable air volume under floor air distribution in a premise not limited to data centre and computer rooms.

### BACKGROUND OF THE INVENTION

Computer rooms or data centres are traditionally cooled with crac (raised floor mounted precision air conditioners) and fixed or static type bar grills on the raised floor tiles whose size is limited to 24inch by 24inch. The air flow across this grill is controlled manually by an adjustable damper installed below the said grill.

In traditional systems, the airflow across the said grill is max -600 cfm and designed with load factor of 1000kg udl. The dampers installed below the grill are adjustable but cannot regulate airflow with high velocities. The air volume cannot be increased or decreased automatically and manual intervention is required. The grill does not deliver higher air volumes than rated. Currently the design calls for higher air volumes in the same foot print size (24inch*24inch). The variable airflow across the grill is not possible via temperature control. The variable airflow across the grill is not possible via pressure control when the area to be cooled in the asile is closed. Air direction is not adjustable and cannot be directed or air deflection on the said grill is not possible.

### OBJECT OF THE INVENTION

Therefore the object of the present invention is to eliminate the convention drawbacks of the systems and method. The current offering from other manufacturers do not use 2 nos temperature sensors for averaging the regulation of the fan or the damper. They either use 2 sensors in 2 different areas making the algorithm very difficult to understand by the end user and knowledge of the subject is a must and this difficulty is over come by our system.

The pressure control override algorithm is not present in any systems being offered by other manufacturers and this control is very helpful to control air pressure in closed areas where the air booster/air modulator/air booster-pro is installed .

The direction adjustment between 0-15* degrees is not available with other manufacturers as they are using fixed type static grill and this adjustment is not possible.

The control of pressure regulation using one pressure sensing device is also not possible with other manufacturers and this pressure input from the sensor can be chained /looped to multiple air boosters/air modulators and the control can be individually done.

The outer grill and the casing is developed to ensure highest efficiency of the product and the complete chassis is integrated from a single sheet metal construction where as in other manufacturers the use of STEEL/ALUMINIUM/PLASTIC.

The product under consideration has the lowest depth and is extremely compact as compared to other manufacturers who offer this product.

The direction of the airflow in the product is bottom to top and there is no need to use sides to generate or allow entry to the air making the product installable side to side or adjacent to each other /back to back which is missing in the other products available.

The different products under consideration can be installed in an area and the control algorithm does not negate the functioning of the system which is a feature not available with other manufacturers.

Therefore the object of the present invention is to have an electronic fan speed regulation on temperature and pressure and can adjust the direction of air, as the fan powered grills locally manufactured and the do not possesses electronic fan speed regulations.

Yet another object of the present invention to overcome the deficiencies in prior techniques wherein the dampers in the grills have 20% leakage in closed position, the grill is not designed to handle high velocity air streams, the grills from tate /uniflair are imported and do not work on the temperature averaging algorithm, the pressure control algorithm for the above product is not available, the above grill is having a fixed bar grid structure and does not incorporate air stream deflection.

### DESCRIPTION OF DRAWING

Figure 1 illustrates an air booster comprising of top grill, controller, fan housing, fan and top cage.

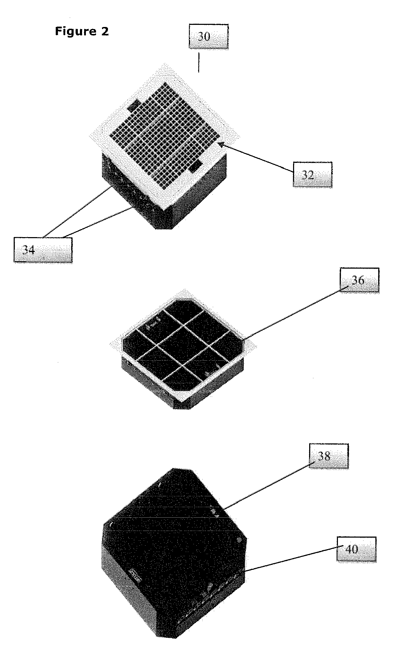

Figure 2 illustrates an air booster-Pro comprising top grill, vane adjuster nuts, directional vanes, controller and vanes.

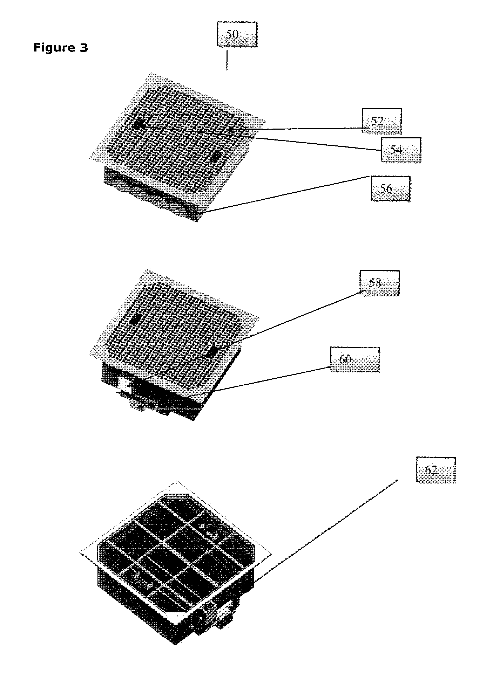

Figure 3 illustrates an air modulator comprising of top grill, controller, damper gears, power supply, and actuator motor

These and other features, aspects, and advantages of the present invention will become better understood when the following detailed description is read with reference to the accompanying drawings in which like characters represent like parts throughout the drawings.

### DETAILED DESCRIPTION OF THE INVENTION

The invention relates generally to an air distribution system such as an air booster / air modulator / air booster - Pro and an apparatus and particularly to providing variable air volume under floor air distribution in a premise not limited to data centre and computer rooms.

References in the specification to "one embodiment", "an embodiment", "an exemplary embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Following flow chart illustrates the overall embodiments of the present invention.

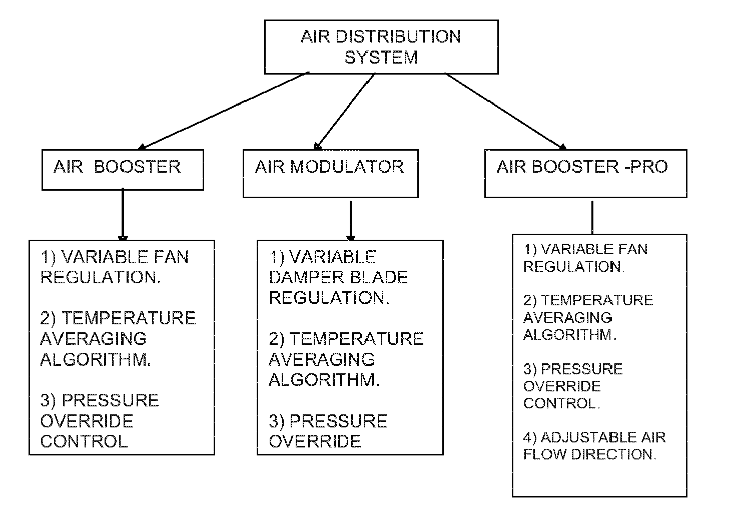

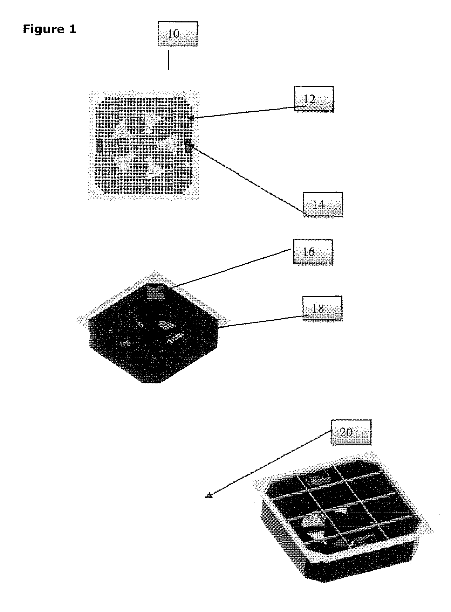

In one of the embodiment of the present invention as shown in figure 1, there is system of said invention that is air booster 10, comprising of top grill (12), controller (14), fan housing (16), fan (18) and top cage (20). An Air Booster -Pro (30) comprising of top grill (32), vane adjuster nuts (34), directional vanes (36), controller (38) and vanes (40). An Air Modulator (50) comprising top grill (52), controller (54), damper gears (56), power supply (58), actuator motor (60) and damper blade (62); wherein in a rack frontal dual temperature sensors connected to the controller used in the air booster uses input finite algorithm and individual values which are displayed on the screen and an average value is used for the fan or damper regulation. The variation of the output is on positive compensation algorithm.

In yet another embodiment of the present invention there is provided the pressure override control algorithm wherein the pressure override algorithm to regulate the air booster / air modulator / air booster - Pro is via differential pressure transmitter installed above the enclosure and the signal then is fed in the microcontroller, either in stand alone or group configuration to realise the negative compensation regulation to the fan or damper as installed.

In one more embodiment of the present invention there is provided the controller algorithm wherein the graphical representation indicates temperature control with pressure over ride regulation.

An air distribution system comprising: an Air booster, an Air modulator, and an air booster -pro for providing variable air volume under floor air distribution in a premise not limited to data centre and computer rooms. An air booster further comprising variable fan regulation, temperature averaging algorithm and pressure override control means. An air modulator further comprising variable damper blade regulation, temperature averaging algorithm and pressure override. An air booster- pro further comprising, variable fan regulation, temperature averaging algorithm, pressure override control and an adjustable air flow direction.

It has been noticed that, the current offering from other manufacturers do not use 2 nos temperature sensors for averaging the regulation of the fan or the damper. They either use 2 sensors in 2 different areas making the algorithm very difficult to understand by the end user and knowledge of the subject is a must and this difficulty is over come by our system.

The pressure control override algorithm is not present in any systems being offered by other manufacturers and this control is very helpful to control air pressure in closed areas where the air booster/air modulator/air booster-pro is installed.

The direction adjustment between 0-15* degrees is not available with other manufacturers as they are using fixed type static grill and this adjustment is not possible.

The control of pressure regulation using one pressure sensing device is also not possible with other manufacturers and this pressure input from the sensor can be chained /looped to multiple air boosters/air modulators and the control can be individually done.

The outer grill and the casing is developed to ensure highest efficiency of the product and the complete chassis is integrated from a single sheet metal construction where as in other manufacturers the use of STEEL/ALUMINIUM/PLASTIC.

The product under consideration has the lowest depth and is extremely compact as compared to other manufacturers who offer this product.

The direction of the airflow in the product is bottom to top and there is no need to use sides to generate or allow entry to the air making the product installable side to side or adjacent to each other /back to back which is missing in the other products available.

The different products under consideration can be installed in an area and the control algorithm does not negate the functioning of the system which is a feature not available with other manufacturers.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An air distribution system comprising:
an Air booster
an Air modulator
and an air booster -pro
for providing variable air volume under floor air distribution in a premise not limited to data centre and computer rooms.

2. An air distribution system as claimed in claim 1, where in an air booster further comprising variable fan regulation, temperature averaging algorithm and pressure override control means.

3. An air distribution system as claimed in claim 1, wherein an air modulator further comprising variable damper blade regulation, temperature averaging algorithm and pressure override.

4. An air distribution system as claimed in claim 1, wherein an air booster-pro further comprising, variable fan regulation, temperature averaging algorithm, pressure override control and an adjustable air flow direction.
